# EUROPEAN PATENT APPLICATION

(11) **EP 4 474 148 A1**
(43) Date of publication of application: **11.12.2024**
(21) Application number: 23749735.9
(22) Date of filing: 31.01.2023
(51) Int. Cl.: B32B 25/04, B32B 1/00, C09K 3/10, F16J 15/00, F16J 15/12

(54) **ANNULAR LAMINATE, SEAL MATERIAL, AND MANUFACTURING METHOD**

(30) Priority: 03.02.2022 JP 2022015801
(71) Applicant: VALQUA, Ltd., Shinagawa-ku Tokyo 141-6024 (JP)
(72) Inventor: OTSUKA, Miki, Gojo-shi, Nara 637-0014 (JP); NOGUCHI, Masamune, Gojo-shi, Nara 637-0014 (JP); OSUMI, Naoki, Gojo-shi, Nara 637-0014 (JP)
(74) Representative: Vossius & Partner Patentanwälte Rechtsanwälte mbB
(86) International application number: PCT/JP2023/003016
(87) International publication number: WO 2023/149419

(57) **Abstract**

The present invention relates to an annular laminate including a substrate and a rubber coating film laminated in contact with the substrate, wherein the rubber coating film includes a crosslinked product of a composition including a crosslinkable perfluoroelastomer (FFKM), a crosslinking agent including at least one of compounds represented by general formulas (1) to (3), and a solvent, and a thickness of the rubber coating film is 1 µm or more and 500 µm or less. According to the present invention, provided are an annular laminate that has good hermetic closure even with a low crushing pressure and can be used as a seal material exhibiting high radical resistance at a high temperature, and a method for manufacturing the same.

## Description

### TECHNICAL FIELD

The present invention relates to an annular laminate, and further also relates to a seal material including the annular laminate, and a method for manufacturing the annular laminate.

### BACKGROUND ART

PTL 1 (Japanese Patent Laying-Open No. 2006-214584) proposes a metal seal used for a vacuum gate valve of a semiconductor manufacturing apparatus.

### CITATION LIST

### PATENT LITERATURE

PTL 1: Japanese Patent Laying-Open No. 2006-214584

### SUMMARY OF INVENTION

### TECHNICAL PROBLEM

When a metal seal is used in a vacuum apparatus, flanges are fastened with a relatively high crushing pressure in order to ensure hermetic closure. A metal seal can realize higher hermetic closure than an elastomer seal, but damages the flange surface, and thus it may be impossible to use a flange and a metal seal repeatedly. Because a semiconductor manufacturing apparatus generally has a flange surface made of aluminum in many cases, the flange surface is damaged, and thus it may be impossible to use a metal seal in a main section of the semiconductor manufacturing apparatus.

In addition, an elastomer seal formed from a fluororubber (FKM) or a perfluoroelastomer (FFKM), which is mainly used in a semiconductor manufacturing apparatus, does not damage the flange surface, but is required to have higher hermetic closure.

Furthermore, a seal material obtained by covering a metal seal with a crosslinked product obtained by crosslinking a crosslinkable perfluoroelastomer (FFKM) with a peroxide-based crosslinking agent has relatively low radical resistance at a high temperature, and the portion covered with the crosslinked product may melt to make it impossible to ensure the hermetic closure.

An object of the present invention is to provide an annular laminate that can be used as a seal material exhibiting high radical resistance at a high temperature, and a method for manufacturing the same.

Another object of the present invention is to provide an annular laminate that can be used as a seal material having a metal seal as a substrate, exhibiting high radical resistance at a high temperature, and capable of providing high hermetic closure with a low crushing pressure, and a method for manufacturing the same.

### SOLUTION TO PROBLEM

The present invention provides the following annular laminate, seal material, manufacturing method, and composition.
[1] An annular laminate comprising a substrate and a rubber coating film laminated in contact with the substrate, wherein
   the rubber coating film comprises a crosslinked product of a composition comprising a crosslinkable perfluoroelastomer (FFKM), a crosslinking agent, and a solvent,
   a thickness of the rubber coating film is 1 µm or more and 500 µm or less, and the crosslinking agent comprises at least one selected from the group consisting of a bis(aminophenol) compound represented by the following general formula (1): 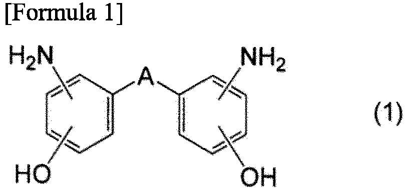
   a bis(aminothiophenol) represented by the following general formula (2): 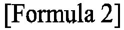 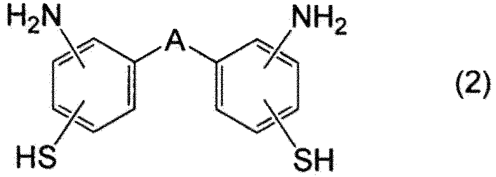
   and a tetraamine compound represented by the following general formula (3): 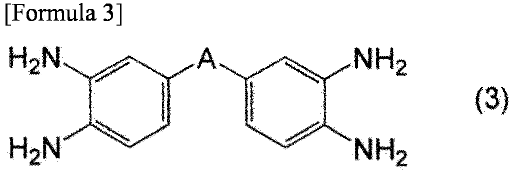
   wherein in formulas (1) to (3), A is SO₂, O, C=O, an alkylene group having 1 to 6 carbon atoms, a perfluoroalkylene group having 1 to 10 carbon atoms, or a carbon-carbon bond that directly bonds two benzene rings to each other; and in formulas (1) and (2), an NH₂ group and an OH group or a SH group on the same benzene ring are adjacent to each other, and the NH₂ group and the OH group or the SH group are in a meta position or a para position with respect to group A.
[2] The annular laminate according to [1], wherein the substrate is a metal seal.
[3] The annular laminate according to [1], wherein the substrate is an elastomer seal.
[4] The annular laminate according to any one of [1] to [3], wherein the thickness of the rubber coating film is 10 µm or more and 200 µm or less.
[5] The annular laminate according to any one of [1] to [4], wherein the crosslinkable perfluoroelastomer (FFKM) comprises a constitutional unit derived from a nitrile group-containing perfluorovinyl ether.
[6] A seal material comprising the annular laminate according to any one of [1] to [5].
[7] A method for manufacturing the annular laminate according to [1], comprising:
   a coating step of coating a substrate with a composition comprising a crosslinkable perfluoroelastomer (FFKM), a crosslinking agent, and a solvent; and
   a crosslinking step of crosslinking the composition.
[8] The method for manufacturing the annular laminate according to [7], wherein in the coating step, the substrate is coated with the composition by spraying or dipping.
[9] A composition comprising a crosslinkable perfluoroelastomer (FFKM), a crosslinking agent, and a solvent, wherein
   the crosslinking agent comprises at least one selected from the group consisting of a bis(aminophenol) compound represented by the following general formula (1): 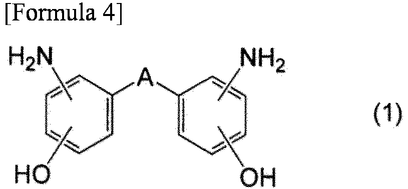 a bis(aminothiophenol) represented by the following general formula (2): 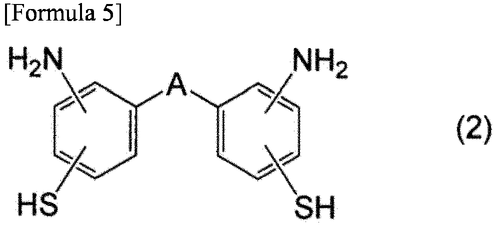 and a tetraamine compound represented by the following general formula (3): 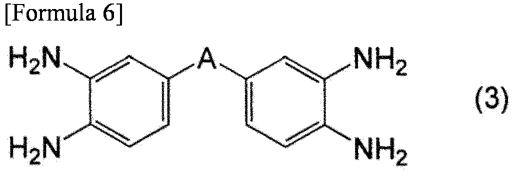 wherein in formulas (1) to (3), A is SO₂, O, C=O, an alkylene group having 1 to 6 carbon atoms, a perfluoroalkylene group having 1 to 10 carbon atoms, or a carbon-carbon bond that directly bonds two benzene rings to each other; and in formulas (1) and (2), an NH₂ group and an OH group or a SH group on the same benzene ring are adjacent to each other, and the NH₂ group and the OH group or the SH group are in a meta position or a para position with respect to group A.

### ADVANTAGEOUS EFFECTS OF INVENTION

According to the present invention, it is possible to provide an annular laminate that can be used as a seal material exhibiting high radical resistance at a high temperature, and a method for manufacturing the same. In addition, according to the present invention, it is possible to provide an annular laminate that can be used as a seal material having a metal seal as a substrate, exhibiting high radical resistance at a high temperature, and capable of providing high hermetic closure with a low crushing pressure, and a method for manufacturing the same.

### BRIEF DESCRIPTION OF DRAWINGS

Fig. 1 is a schematic plan view showing one example of the shape of the annular laminate of the present invention when viewed from the lamination direction.
Fig. 2 is a schematic cross-sectional view showing one example of the layer configuration of the annular laminate of the present invention.
Fig. 3 is a schematic cross-sectional view showing one example of the layer configuration of the annular laminate of the present invention.
Fig. 4 is a schematic cross-sectional view showing an example of the shape of a specially shaped metal seal.

### DESCRIPTION OF EMBODIMENTS

Hereinafter, embodiments of the present invention will be described with reference to the drawings, but the present invention is not limited to the following embodiments. In all the drawings below, the scale of each constituent is adjusted appropriately to facilitate understanding thereof, and the scale of each constituent shown in the drawings does not necessarily match the scale of the actual constituent.

### <Annular laminate>

An annular laminate according to one embodiment of the present invention includes a substrate and a rubber coating film laminated in contact with the substrate, wherein the rubber coating film includes a crosslinked product of the composition including a crosslinkable perfluoroelastomer (FFKM), a crosslinking agent, and a solvent, the thickness of the rubber coating film is 1 µm or more and 500 µm or less, and the crosslinking agent includes at least one selected from the group consisting of a bis(aminophenol) compound represented by general formula (1), a bis(aminothiophenol) compound represented by general formula (2), and a tetraamine compound represented by general formula (3).

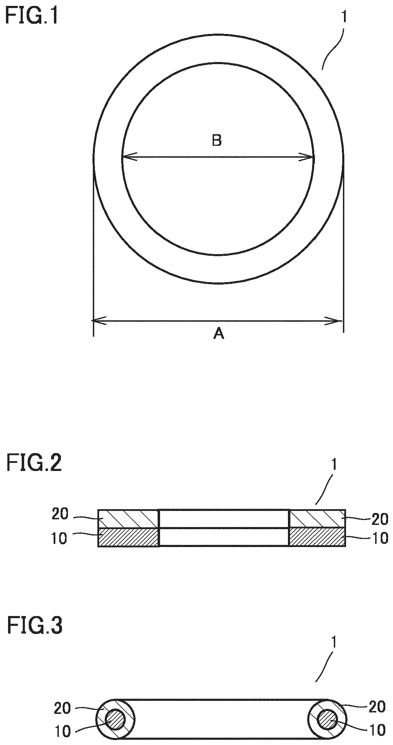

As shown in Fig. 1, the shape of an annular laminate 1 when viewed from the lamination direction (thickness direction) is annular. An outer diameter A of annular laminate 1 may be, for example, 2.5 mm or more and 1500 mm or less, and an inner diameter B may be, for example, 0.5 mm or more and 1495 mm or less, and outer diameter A and inner diameter B may have a dimension outside their respective ranges described above.

Fig. 2 shows a cross section of an annular laminate according to the present invention. Annular laminate 1 shown in Fig. 2 includes a substrate 10 and a rubber coating film 20 laminated in contact with a surface of substrate 10. Annular laminate 1 has rubber coating film 20 laminated on substrate 10, and thus when substrate 10 is a metal seal described later, it tends to be easy to obtain high hermetic closure even with a low crushing pressure. Because of this, annular laminate 1 of the present invention is suitable as a seal material.

In annular laminate 1, rubber coating film 20 is disposed on one side of substrate 10, and rubber coating film 20 may be disposed on each of both sides of substrate 10. When rubber coating film 20 is disposed on each of both sides of substrate 10, damage to both the flange surface and the groove surface can be easily suppressed. In addition, the rubber coating film may be disposed in such a way as to cover the whole substrate. As shown in Fig. 3, when substrate 10 is an O-ring, rubber coating film 20 can be disposed all around substrate 10.

### [Substrate]

The shape of substrate 10 when viewed from the lamination direction (thickness direction) can be annular. Examples of substrate 10 include a metal seal and an elastomeric seal.

The metal seal can be, for example, a thin metal plate. The thin metal plate may have a flat main surface, or may have a groove formed in a main surface. In addition, the thin metal plate may be shaped in such a way as to have a wavy or sawtooth cross-sectional shape.

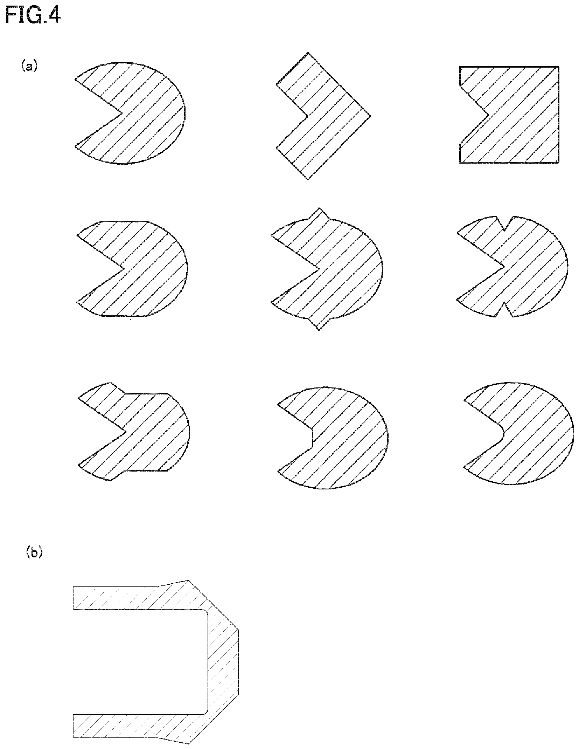

In addition, the metal seal can be, for example, a metal O-ring, a metal C-ring, a metal E-ring, a metal omega-ring, a ring joint gasket, a specially shaped metal seal, or the like. The metal O-ring may be a metal seal having a hollow interior. The metal C-ring may be a spring-energized metal C-ring in which a coil spring is used as an elastic element and covered with a metal plate (envelope). Examples of the specially shaped metal seal include a metal gasket having a V-shaped circumferential groove on the outer peripheral surface or the inner peripheral surface thereof (for example, one disclosed in Japanese Patent Laying-Open No. 2019-027591), and a metal gasket having a vertical **cross-sectional** shape that is in the shape of
⊐
or horizontally oriented U-shaped. Fig. 4(a) illustrates a cross-sectional shape of a metal gasket having a V-shaped circumferential groove on the outer peripheral surface or the inner peripheral surface thereof. Fig. 4(b) illustrates a cross-sectional shape of a metal gasket having a vertical cross-sectional shape that is in the shape of
⊐
or horizontally oriented U-shaped.

Examples of a material constituting the metal seal include aluminum; magnesium; titanium; an alloy including aluminum, magnesium, or titanium; stainless steel; Inconel; carbon steel; lead; gold; silver; copper; nickel; tantalum; chrome-molybdenum steel; and Monel. The metal constituting substrate 10 is preferably aluminum; titanium; or an alloy including aluminum or titanium (for example, an aluminum alloy including aluminum as a main component), and more preferably a metal material including aluminum, that is, aluminum; or an alloy including aluminum (for example, an aluminum alloy including aluminum as a main component).

When substrate 10 is a metal seal, it is difficult for a gas to permeate substrate 10, and thus even if the thickness of rubber coating film 20 is thin, the hermetic closure can be easily increased.

Examples of the elastomer seal include an O-ring. Examples of a material constituting the elastomer seal include a vinylidene fluoride-based fluororubber (FKM). Examples of the vinylidene fluoride-based fluororubber (FKM) include a vinylidene fluoride/hexafluoropropylene-based copolymer, a binary vinylidene fluoride-based rubber, and a ternary vinylidene fluoride rubber such as a vinylidene fluoride/tetrafluoroethylene/hexafluoropropylene-based copolymer, a vinylidene fluoride/tetrafluoroethylene/perfluoroalkyl vinyl ether-based copolymer, or a vinylidene fluoride/tetrafluoroethylene/propylene-based copolymer. As a material constituting the elastomer seal other than the vinylidene fluoride-based fluororubber, a tetrafluoroethylene/propylene-based copolymer, for example, can be used.

The thickness of substrate 10 can be, for example, 0.5 mm or more and 20 mm or less. Substrate 10 can have a thickness within the above range regardless of whether substrate 10 is sheet-shaped or an O-ring.

### [Rubber coating film]

Rubber coating film 20 includes a crosslinked product of a composition including a crosslinkable perfluoroelastomer (FFKM) (hereinafter also referred to as FFKM), a crosslinking agent including at least one selected from the group consisting of a bis(aminophenol) compound represented by general formula (1), a bis(aminothiophenol) compound represented by general formula (2), and a tetraamine compound represented by general formula (3) (hereinafter also referred to as a crosslinking agent), and a solvent. Rubber coating film 20 preferably consists of only a crosslinked product of the above composition. Rubber coating film 20 can exhibit high radical resistance at a high temperature by including a crosslinked product in which the FFKM is crosslinked by a crosslinking agent.

Rubber coating film 20 may be single-layered or multi-layered. When rubber coating film 20 is multi-layered, the types and the thicknesses of the layers constituting rubber coating film 20 may each be the same or different.

Examples of the FFKM include a tetrafluoroethylene (TFE)-perfluoro(alkyl vinyl ether)-based copolymer and a TFE-perfluoro(alkoxyalkyl vinyl ether)-based copolymer. These copolymers may further include a constitutional unit derived from a further perfluoromonomer. One or two or more FFKMs can be used.

The perfluoro(alkyl vinyl ether) forming a tetrafluoroethylene (TFE)-perfluoro(alkyl vinyl ether)-based copolymer can have 1 to 10 carbon atoms in the alkyl group, and for example, can be perfluoro(methyl vinyl ether), perfluoro(ethyl vinyl ether), perfluoro(propyl vinyl ether), or the like. Perfluoro(methyl vinyl ether) is preferable.

The perfluoro(alkoxyalkyl vinyl ether) forming a TFE-perfluoro(alkoxyalkyl vinyl ether)-based copolymer can have 3 to 15 carbon atoms in the group bonded to the vinyl ether group (CF₂=CFO-), and for example, can be

CF₂=CFOCF₂CF(CF₃)OCₙF₂ₙ₊₁,

CF₂=CFO(CF₂)₃OCₙF₂ₙ₊₁,

CF₂=CFOCF₂CF(CF₃)O(CF₂O)ₘCₙF₂ₙ₊₁,

or

CF₂=CFO(CF₂)₂OCₙF₂ₙ₊₁.

In the above formulas, n is, for example, 1 to 5, and m is, for example, 1 to 3.

Crosslinkability can be imparted to an FFKM by copolymerizing a crosslinking site monomer (including a constitutional unit derived from the crosslinking site monomer). The crosslinking site means a site capable of a crosslinking reaction. Examples of the crosslinking site include a nitrile group.

One example of a crosslinking site monomer having a nitrile group as a crosslinking site is a nitrile group-containing perfluorovinyl ether. Examples of the nitrile group-containing perfluorovinyl ether include
CF₂=CFO(CF₂)ₙOCF(CF₃)CN (wherein n is, for example, 2 to 4),
CF₂=CFO(CF₂)ₙCN (wherein n is, for example, 2 to 12),
CF₂=CFO[CF₂CF(CF₃)O]ₘ(CF₂)ₙCN (wherein n is, for example, 2 and m is, for example, 1 to 5),
CF₂=CFO[CF₂CF(CF₃)O]ₘ(CF₂)ₙCN (wherein n is, for example, 1 to 4, m is, for example, 1 to 2), and
CF₂=CFO[CF₂CF(CF₃)O]ₙCF₂CF(CF₃)CN (wherein n is, for example, 0 to 4).

The ratio by mol of constitutional unit derived from TFE/constitutional unit derived from a perfluoro(alkyl vinyl ether) or a perfluoro(alkoxyalkyl vinyl ether)/constitutional unit derived from the crosslinking site monomer in an FFKM is usually 53.0 to 79.9%/20.0 to 46.9%/0.4 to 1.5%. Two or more FFKMs having different ratios of the above constitutional units can also be used. The crosslinkable perfluoroelastomer (FFKM) contains preferably a constitutional unit derived from a nitrile group-containing perfluorovinyl ether, and more preferably a constitutional unit derived from tetrafluoroethylene, a constitutional unit derived from a perfluoro(alkyl vinyl ether) or a perfluoro(alkoxyalkyl vinyl ether), and a constitutional unit derived from a nitrile group-containing perfluorovinyl ether.

Specific examples of a preferably used crosslinking agent include 2,2-bis(3-amino-4-hydroxyphenyl)hexafluoropropane (BOAP), 4,4'-sulfonylbis(2-aminophenol), 9,9-bis(3-amino-4-hydroxyphenyl)fluorene, 3,3'-diaminobenzidine, and 3,3',4,4'-tetraaminobenzophenone. BOAP is preferably used.

The content of the crosslinking agent (when two or more are used, the total content) in the composition may be, for example, 0.1 parts by mass or more and 5.0 parts by mass or less per 100 parts by mass of the crosslinkable fluoroelastomer.

As the solvent, a volatile liquid that can dissolve an uncrosslinked perfluoroelastomer is used. Examples of the solvent include a fluorine solvent such as a perfluorocarbon, a hydrofluoroether, a hydrofluorocarbon, a perfluoroether, a hydrochlorofluorocarbon, a perfluoroamine, and a fluoroalcohol. Among these, a perfluorocarbon, a perfluoroether, and a perfluoroamine are preferable.

The solid content of the composition excluding the solvent may be, for example, 0.05% by mass or more and 10% by mass or less based on the total amount of the composition, and from the viewpoint of solubility and applicability, preferably 0.1% by mass or more and 5% by mass or less, and more preferably 0.5% by mass or more and 5% by mass or less.

For the purpose of improving processability, adjusting a physical property, or the like, the composition can include, as necessary, an additive such as a co-crosslinking agent, an anti-aging agent, an antioxidant, a vulcanization accelerator, a processing aid (such as stearic acid), a stabilizer, a tackifier, a silane coupling agent, a plasticizer, a flame retardant, a release agent, a wax, or a lubricant. Another example of the additive is a tackiness reducing (preventing) agent such as a fluorine-based oil (for example, a perfluoroether). Only one additive may be used, or two or more additives may be used in combination.

However, for example, when annular laminate 1 is used in a high-temperature environment, volatilization, elution, or precipitation may occur, and thus the amount of the additive is preferably as small as possible (for example, 10 parts by mass or less, preferably 5 parts by mass or less, more preferably 2 parts by mass or less, and further preferably 1 part by mass or less per 100 parts by mass of the crosslinkable fluoroelastomer), and it is desirable not to contain any additive.

The crosslinkable fluoroelastomer composition can include, as necessary, an inorganic filler such as silica, alumina, zinc oxide, titanium oxide, clay, talc, diatomaceous earth, barium sulfate, calcium carbonate, magnesium carbonate, calcium oxide, mica, graphite, aluminum hydroxide, aluminum silicate, hydrotalcite, a metal powder, a glass powder, or a ceramic powder, or an organic filler made of polytetrafluoroethylene (PTFE), a tetrafluoroethylene-perfluoroalkyl vinyl ether copolymer (PFA), polyvinylidene fluoride (PVDF), or the like. These organic fillers may be contained during the FFKM synthesis stage.

However, if the content of the inorganic filler increases, the problem of scattering in a harsh environment may become apparent, and thus the amount of the inorganic filler is preferably as small as possible (for example, 10 parts by mass or less, preferably 5 parts by mass or less, more preferably 2 parts by mass or less, and further preferably 1 part by mass or less per 100 parts by mass of the crosslinkable fluoroelastomer), and it is desirable not to blend any inorganic filler. The inorganic filler refers to a filler containing a metal element (Ba, Ti, Zn, Al, Mg, Ca, Si, or the like).

Examples of a method for manufacturing the composition include a method involving kneading a crosslinkable FFKM and a crosslinking agent and then mixing these with a solvent, or a method involving collectively mixing a crosslinkable perfluoroelastomer (FFKM), a crosslinking agent, and a solvent. From the viewpoint of improving dispersibility, the method for manufacturing the composition is preferably a method involving kneading a crosslinkable FFKM and a crosslinking agent and then mixing these with a solvent. The crosslinked product of the composition can be obtained, for example, by crosslinking the composition with which substrate 10 has been coated, under high temperature and pressure. The solvent may be removed after coating with the composition and before the composition is crosslinked, and the rubber coating film may or may not include a solvent.

The thickness of rubber coating film 20 is 1 µm or more and 500 µm or less. When the thickness of rubber coating film 20 is 1 µm or more, high radical resistance can be exhibited at a high temperature. When the thickness of rubber coating film 20 is within the above range, the flange surface is not damaged when the substrate is a metal seal, and the hermetic closure is improved even with a low crushing pressure. When the substrate is a metal seal, the thickness of rubber coating film 20 is preferably 10 µm or more and 200 µm or less, more preferably 10 µm or more and 100 µm or less, and further preferably 20 µm or more and 80 µm or less from the viewpoint of damage to the flange surface, crushing pressure, and hermetic closure. In addition, when the substrate is an elastomer seal, the thickness of rubber coating film 20 is preferably 10 µm or more and 200 µm or less, more preferably 10 µm or more and 100 µm or less, further preferably 10 µm or more and 50 µm or less, and particularly preferably less than 50 µm from the viewpoint of radical resistance and durability of the coating film.

### <Method for manufacturing annular laminate>

A method for manufacturing the annular laminate according to another embodiment of the present invention includes a coating step of coating a substrate with a composition including a crosslinkable perfluoroelastomer (FFKM), the crosslinking agent, and a solvent, and a crosslinking step of crosslinking the composition. The description of the annular laminate described above is applied to the description of the composition.

In the coating step, a conventionally known method may be used as a method for coating a substrate with a composition, and examples thereof include spraying, roller coating, spin coating, a die coater, doctor blade coating, and dipping. Among these, spraying and dipping are preferable from the viewpoint of uniform coating film formation and production efficiency. In addition, repeated coating with the composition is possible. For example, it is possible to coat a substrate with the composition, dry the coating film, and then further coat the dried coating film with the composition.

By subjecting a surface of the substrate to a surface treatment such as an electrolytic treatment, a corona treatment, or a plasma treatment before coating the substrate with the composition, the adhesiveness between the composition and the substrate can be easily increased.

After the substrate is coated with the composition, a drying treatment can be applied before the composition is crosslinked.

In the crosslinking step, a rubber coating film can be formed on the substrate by crosslinking the composition with which the substrate has been coated, under high temperature and pressure. The crosslinking temperature may usually be 150°C or more and 300°C or less. In order to increase the heat resistance of the rubber coating film, secondary crosslinking may be carried out at a temperature of, for example, 150°C or more and 320°C or less. Secondary crosslinking may be carried out by irradiation with an ionizing radiation. As the ionizing radiation, an electron beam or a γ ray can be preferably used.

### <Composition>

A composition according to one further embodiment of the present invention includes a crosslinkable perfluoroelastomer (FFKM), a crosslinking agent including at least one selected from the group consisting of a bis(aminophenol) compound represented by general formula (1), a bis(aminothiophenol) compound represented by general formula (2), and a tetraamine compound represented by general formula (3), and a solvent. By crosslinking the composition, a rubber coating film having excellent radical resistance can be formed although the rubber coating film is a thin film (for example, 500 µm or less, preferably 200 µm or less, further preferably 100 µm or less, more preferably 80 µm or less, particularly preferably 50 µm or less, more particularly preferably less than 50 µm, and for example 1 µm or more, preferably 10 µm or more, more preferably 20 µm or more). The types and the preferable ranges described for the annular laminate described above are applied to the types and the preferable ranges of the crosslinkable perfluoroelastomer (FFKM), the crosslinking agent, the solvent, and the optional additive.

### Examples

Hereinafter, the present invention will be described in more detail with reference to Examples. Unless otherwise specified, "%" and "parts" in examples are % by mass and parts by mass, respectively.

### <Example 1 and Comparative Examples 1 and 2>

A composition was prepared with the components and blending ratio shown in Table 1. After that, the composition was sprayed onto a substrate (metal seal, outer diameter: 158.6 mm, inner diameter: 151 mm, diameter: 3.8 mm) and crosslinked at 280°C, and then a rubber coating film having a thickness of 40 µm was formed to obtain an annular laminate of Example 1. The hermetic closure of the obtained annular laminate and the damage to the flange surface were evaluated according to the following methods.

### [Hermetic closure]

The annular laminate was fastened to a flange portion installed in a pipe for a compressed gas at the compressibility and load shown in Table 1. Helium gas at RT (room temperature) and at a flow rate of 10 ml/min was supplied to the pipe for a compressed gas, and the amount of helium leaking from the seal material after 3 hours was measured with a He leak detector. Results thereof are shown in Table 1.

### [Damage to flange surface]

After the leak rate was measured, the flange portion was released, and the flange surface was visually checked for damage.

### <Examples 2 and 3>

Annular laminates of Examples 2 and 3 were each produced in the same manner as in Example 1, except that the type of the substrate and the thickness of the rubber coating film shown in Table 1 were used, and evaluated. Results thereof are shown in Table 1.

### <Comparative Examples 1 and 2>

The substrates shown in Table 1 were each used to carry out evaluations at the compressibility and the load shown in Table 1. Results thereof are shown in Table 1.

**[Table 1]**

| | Example 1 | Example 2 | Example 3 | Comparative Example 1 | Comparative Example 2 |
|---|---|---|---|---|---|
| Type of substrate | Spring-energized metal C-ring | Spring-energized metal C-ring | Spring-energized metal C-ring | FKM O-ring A | Spring-energized metal C-ring |
| FFKM A (parts) | 100 | 100 | 100 | - | - |
| BOAP (parts) | 0.5 | 0.5 | 0.5 | - | - |
| Solvent (parts) | 4000 | 4000 | 4000 | - | - |
| Rubber coating film thickness (µm) | 40 | 1.0 | 200 | - | - |
| Compressibility (%) | 3 | 3 | 3 | 18 | 3 |
| Compressive load (N/mm) | 40 | 40 | 40 | 3 | 40 |
| Leak rate (Pa·m³/s) | 4.4×10⁻⁸ | 4.0×10⁻⁸ | 8.9×10⁻⁸ | 2.80×10⁻⁷ | Leak |
| Damage to flange surface | No | No | No | No | Yes |

| | | | | | |
|---|---|---|---|---|---|
| FFKM A: Tetrafluoroethylene (TFE)-perfluoro(alkyl vinyl ether)-based copolymer "PFE131TZ" manufactured by 3M BOAP: 2,2-Bis(3-amino-4-hydroxyphenyl)hexafluoropropane Solvent: Fluorine solvent "Fluorinert PF5060" manufactured by 3M Spring-energized metal C-ring: Trypack "No. 3645-ZAA7B" manufactured by VALQUA, LTD. FKM O-ring A: Size AS568-229 | | | | | |

The annular laminates of Examples 1 to 3 had a low leak rate even at a low compressibility. On the other hand, in Comparative Example 1, the compressive load was low, but the leak rate was high. In Comparative Example 2, not only did helium leak and hermetic closure fail, but also damage to the flange surface was observed.

### <Examples 4 and 5 and Comparative Examples 3 and 4>

Compositions were prepared with the components and the blending ratios shown in Table 2. After that, the compositions were dipped 5 times in a solvent with a substrate (FKM O-ring B, outer diameter: 32.05 mm, inner diameter: 24.99 mm, thickness: 3.53 mm), dried, and crosslinked at 280°C, and then rubber coating films having thicknesses, respectively, shown in Table 2 were formed to obtain annular laminates of Examples 4 and 5 and Comparative Examples 3 and 4. The radical resistance at a high temperature of the obtained annular laminates was evaluated according to the following method.

### [Evaluation of fluorine radical resistance]

A fluorine radical exposure test involving exposing the seal material to a fluorine radical generated by remote plasma of NF₃ under the following conditions was carried out, and the appearance of the seal material after the test was visually observed.

### (Conditions for fluorine radical exposure test)

- Plasma source: Remote plasma source,
- Plasma output: 5000 W,
- Gas flow rate: NF₃, 1 slm; argon, 1 slm,
- Degree of vacuum: 5 torr,
- Test temperature: 200°C,
- Test time: 3 hours.

### (Evaluation criteria)

O: Melting of the surface was not observed.
X: Melting of the surface was observed.

**[Table 2]**

| | Example 4 | Example 5 | Comparative Example 3 | Comparative Example 4 |
|---|---|---|---|---|
| FFKM A (parts) | 100 | 100 | - | - |
| FFKM B (parts) | - | - | 100 | 100 |
| BOAP (parts) | 0.5 | 0.5 | - | - |
| Co-crosslinking agent (parts) | - | - | 1.5 | 1.5 |
| Peroxide (parts) | - | - | 1.0 | 1.0 |
| Solvent (parts) | 100,000 | 5,000 | 100,000 | 5,000 |
| Thickness (µm) | 1.7 | 2.7 | 1.6 | 2.8 |
| Radical resistance | O | O | X | X |

| | | | | |
|---|---|---|---|---|
| FFKM A: Tetrafluoroethylene (TFE)-perfluoro(alkyl vinyl ether)-based copolymer "PFE131TZ" manufactured by 3M FFKM B: Tetrafluoroethylene (TFE)-perfluoro(alkyl vinyl ether)-based copolymer "Tecnoflon PFR94" manufactured by Solvay BOAP: 2,2-Bis(3-amino-4-hydroxyphenyl)hexafluoropropane Co-crosslinking agent: "TAIC" manufactured by Mitsubishi Chemical Corporation Peroxide: "PERHEXA 25B" manufactured by NOF CORPORATION Solvent: Fluorine solvent "Fluorinert PF5060" manufactured by 3M | | | | |

The compositions of the elastomer compositions FKM A and B that constitute FKM O-rings A and B, respectively, are shown in Table 3.

**[Table 3]**

| | FKM A | FKM B |
|---|---|---|
| FKM A (parts) | 100 | - |
| FKM B (parts) | - | 100 |
| Carbon black | 20 | - |
| Calcium hydroxide | 6 | - |
| Magnesium oxide (parts) | 3 | - |
| Co-crosslinking agent (parts) | - | 4 |
| Peroxide (parts) | - | 1.5 |

| | | |
|---|---|---|
| FKM A: Vinylidene fluoride (VDF)-hexafluoropropylene (HFP)-based copolymer "DAI-EL G701" manufactured by Daikin, LTD. FKM B: Vinylidene fluoride (VDF)-tetrafluoroethylene (TFE)-hexafluoropropylene (HFP)-based copolymer "DAI-EL G902" manufactured by Daikin, LTD. Carbon black: Thermax N-990 manufactured by Cancarb Calcium hydroxide: CALDIC #2000 manufactured by Ohmi Chemical Industry Co., Ltd. Magnesium oxide: Kyowamag #150 manufactured by Kyowa Chemical Industry Co., Ltd. Co-crosslinking agent: "TAIC" manufactured by Mitsubishi Chemical Corporation Peroxide: "PERHEXA 25B" manufactured by NOF CORPORATION | | |

The annular laminates of Examples 4 and 5 had good radical resistance at a high temperature. On the other hand, Comparative Examples 3 and 4 did not have sufficient radical resistance at a high temperature.

### REFERENCE SIGNS LIST

1 Annular laminate; 10 Substrate; 20 Rubber coating film; A Outer diameter; B Inner diameter.

## Claims

1. An annular laminate comprising a substrate and a rubber coating film laminated in contact with the substrate, wherein
the rubber coating film comprises a crosslinked product of a composition comprising a crosslinkable perfluoroelastomer (FFKM), a crosslinking agent, and a solvent,
a thickness of the rubber coating film is 1 µm or more and 500 µm or less, and
the crosslinking agent comprises at least one selected from the group consisting of a bis(aminophenol) compound represented by the following general formula (1): 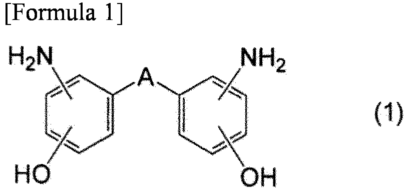
a bis(aminothiophenol) represented by the following general formula (2): 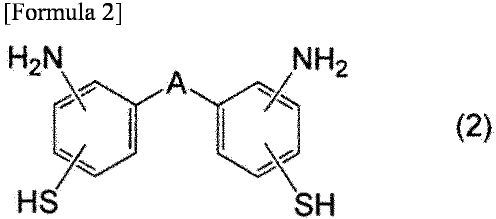
and a tetraamine compound represented by the following general formula (3): 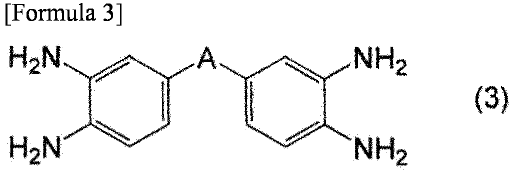
wherein in formulas (1) to (3), A is SO₂, O, C=O, an alkylene group having 1 to 6 carbon atoms, a perfluoroalkylene group having 1 to 10 carbon atoms, or a carbon-carbon bond that directly bonds two benzene rings to each other; and in formulas (1) and (2), an NH₂ group and an OH group or a SH group on the same benzene ring are adjacent to each other, and the NH₂ group and the OH group or the SH group are in a meta position or a para position with respect to group A.

2. The annular laminate according to claim 1, wherein the substrate is a metal seal.

3. The annular laminate according to claim 1, wherein the substrate is an elastomer seal.

4. The annular laminate according to any one of claims 1 to 3, wherein the thickness of the rubber coating film is 10 µm or more and 200 µm or less.

5. The annular laminate according to any one of claims 1 to 4, wherein the crosslinkable perfluoroelastomer (FFKM) comprises a constitutional unit derived from a nitrile group-containing perfluorovinyl ether.

6. A seal material comprising the annular laminate according to any one of claims 1 to 5.

7. A method for manufacturing the annular laminate according to claim 1, comprising:
a coating step of coating a substrate with a composition comprising a crosslinkable perfluoroelastomer (FFKM), a crosslinking agent, and a solvent; and
a crosslinking step of crosslinking the composition.

8. The method for manufacturing the annular laminate according to claim 7, wherein in the coating step, the substrate is coated with the composition by spraying or dipping.

9. A composition comprising a crosslinkable perfluoroelastomer (FFKM), a crosslinking agent, and a solvent, wherein
the crosslinking agent comprises at least one selected from the group consisting of a bis(aminophenol) compound represented by the following general formula (1): 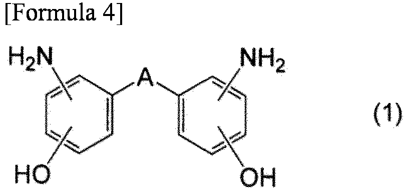
a bis(aminothiophenol) represented by the following general formula (2): 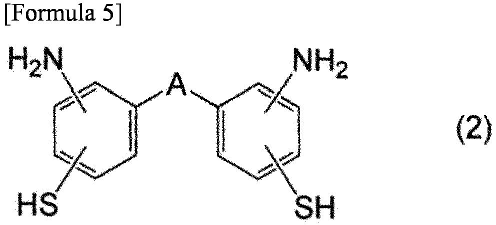
and a tetraamine compound represented by the following general formula (3): 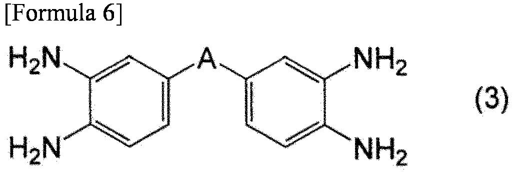
wherein in formulas (1) to (3), A is SO₂, O, C=O, an alkylene group having 1 to 6 carbon atoms, a perfluoroalkylene group having 1 to 10 carbon atoms, or a carbon-carbon bond that directly bonds two benzene rings to each other; and in formulas (1) and (2), an NH₂ group and an OH group or a SH group on the same benzene ring are adjacent to each other, and the NH₂ group and the OH group or the SH group are in a meta position or a para position with respect to group A.
